# EUROPEAN PATENT APPLICATION

(11) **EP 2 706 381 A1**
(43) Date of publication of application: **12.03.2014**
(21) Application number: 13180691.1
(22) Date of filing: 16.08.2013
(51) Int. Cl.: G01S 19/27

(54) **Satellite signal receiver and method for updating ephemeris information thereby**

(30) Priority: 05.09.2012 CN 201210326388; 12.08.2013 US 201313964258
(71) Applicant: O2 Micro, Inc., Santa Clara, CA 95054 (US)
(72) Inventor: Gao, Ke, 610041 Chengdu (CN); Liu, Mao, 201203 Shanghai (CN)
(74) Representative: Lippert, Stachow & Partner

(57) **Abstract**

A satellite signal receiver and a method for updating ephemeris information thereby are disclosed. The receiver includes an instruction module, a signal processing module, and an update module. The instruction module is configured to send an instruction for updating ephemeris information at a set time interval. The signal processing module is configured to obtain corresponding satellite data. The update module is configured to update the ephemeris information according to the obtained satellite data in response to the instruction for updating ephemeris information.

## Description

### RELATED APPLICATIONS

This application claims priority to Patent Application Number 201210326388.5, filed on September 5 2012 with State Intellectual Property Office of the P.R. China (SIPO), the specification of which is incorporated herein by reference in its entirety.

### FIELD OF THE PRESENT TEACHING

The present teaching relates generally to the field of satellite navigation technology. Specifically, the present teaching relates to a satellite signal receiver and a method for updating ephemeris information thereby.

### BACKGROUND

Whereas a conventional positioning system, such as the Global Positioning System (GPS) or the BeiDou (BD) Satellite Navigation System, generally updates ephemeris information every two hours. A conventional satellite signal receiver, e.g., GPS receiver or BD receiver, etc., downloads satellite data only when the satellite signal receiver is in the working mode and updates the ephemeris information in the receiver according to the downloaded satellite data. If the ephemeris information in the receiver fails to be updated within two hours, the ephemeris information is invalid and cannot be used to perform positioning. Similarly, if the almanac in the receiver fails to be updated within 24 hours, the almanac is invalid.

If a receiver is not booted for a significant period of time, for example, if the receiver is in a sleep mode for more than 24 hours, the ephemeris information and/or the almanac are invalid. As such, a conventional satellite signal receiver must be regularly booted from either a warm boot mode or a cold boot mode. The regular regarding-booting costs a significant amount of time to capture, track, and demodulate the satellite signals. This process may take upwards of 30 seconds and increases the power consumption of the device. As a result, existing positioning technologies require significant time and power consumption.

### SUMMARY

In one embodiment of the present technology, a satellite signal receiver is disclosed. The receiver according to this embodiment includes an instruction module, a signal processing module, and an update module. The instruction module is configured to send an instruction for updating ephemeris information at a set time interval. The signal processing module is configured to obtain corresponding satellite data. The update module is configured to update the ephemeris information according to the obtained satellite data in response to the instruction for updating ephemeris information.

In another embodiment of the present technology, a method for updating ephemeris information in a receiver is disclosed. The method of this embodiment includes the steps of sending an instruction for updating ephemeris information at a set time interval by an instruction module; obtaining corresponding satellite data by a signal processing module; and updating the ephemeris information according to the obtained satellite data in response to the instruction for updating ephemeris information by an update module.

### BRIEF DESCRIPTION OF THE DRAWINGS

Features and advantages of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is an exemplary block diagram illustrating an example of a satellite signal receiver (hereinafter receiver), in accordance with one embodiment of the present disclosure;

FIG. 2 is an exemplary block diagram illustrating another example of a receiver, in accordance with one embodiment of the present disclosure;

FIG. 3 is an exemplary block diagram illustrating another example of a receiver, in accordance with one embodiment of the present disclosure;

FIG. 4 is an exemplary block diagram illustrating another example of a receiver, in accordance with one embodiment of the present disclosure;

FIG. 5 is an exemplary block diagram illustrating another example of a receiver, in accordance with one embodiment of the present disclosure;

FIG. 6 is a flowchart illustrating an exemplary of a method for updating the ephemeris information in a receiver, in accordance with one embodiment of the present disclosure;

FIG. 7 is a flowchart illustrating one example of a method for updating the ephemeris information in a receiver, in accordance with one embodiment of the present disclosure; and

FIG. 8 is a flowchart illustrating one example of a method for updating the ephemeris information in a receiver, in accordance with one embodiment of the present disclosure.

### DETAILED DESCRIPTION

Reference will now be made in detail to several embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, circuits, and devices have not been described in detail as not to unnecessarily obscure aspects of the present teaching.

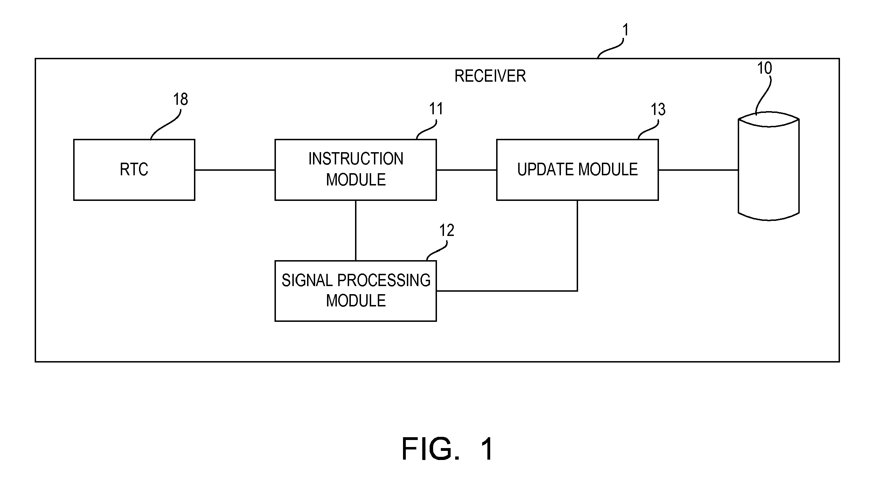

FIG. 1 illustrates an example of a satellite signal receiver (hereinafter receiver) 1, in accordance with one embodiment of the present disclosure. As shown in FIG. 1, the receiver 1 includes an instruction module 11, a signal processing module 12, an update module 13, and a Real Time Clock (hereinafter RTC) 18.

As shown in FIG. 1, the instruction module 11 is configured to send an instruction for updating the ephemeris information to the signal processing module 12 and the update module 13 at a predefined time interval. The signal processing module 12 is configured to capture, track, and demodulate satellite signals in response to the instruction from the instruction module 11, and download corresponding satellite data. The update module 13 is configured to update the ephemeris information 10 in the receiver 1 based on the satellite data downloaded by the signal processing module 12 in response to the instruction from the instruction module 11.

Specifically, the instruction module 11 can send the instruction for updating the ephemeris information at the predefined time interval according to the RTC 18. In this case, even if an external power for supplying power to the receiver 1 is cut off, the RTC 18 can still continue to run because of a backup power source, e.g. battery, in the receiver 1. As such, the instruction module 11 can send an instruction every time interval according to the RTC 18 in the receiver 1.

In addition, the instruction module 11 may send an instruction for updating the ephemeris information according to a RTC in an external system, e.g. the RTC in a camera. For example, when the receiver 1 is applied to a digital product, e.g., a camera, the RTC in the camera can be used as clock basis for sending the instruction every time interval, provided that the RTC in the camera can run without interruption of the power-off of the external power.

As the receiver may download the satellite data and update the ephemeris information at predefined time intervals, the latest ephemeris information can be kept even if the receiver is asleep. The latest ephemeris information can be used for quickly positioning the receiver when the receiver is booted. In addition, the time interval can be set according to practical requirements, e.g., positioning accuracy and/or practical power consumption, to achieve the optimum balance among the positioning speed, positioning accuracy, and the power consumption.

In one embodiment, as the satellite updates the ephemeris information every two hours, the time interval for sending the instruction is set for two hours. Specifically, the instruction module 11 sends the instruction for updating the ephemeris information every two hours, and the signal processing module 12 downloads the satellite data and the update module 13 updates the ephemeris information every two hours. Thus, the latest ephemeris information stored in the receiver 1 can be used for quickly positioning when the receiver 1 is booted at any time.

In a condition that the time interval for sending the instruction is set to be two hours, the receiver 1 in the present invention can be positioned within one second when the receiver is booted, and the capturing sensitivity and tracking sensitivity is also improved. As the ephemeris information is updated every two hours, the navigation bit boundary of the satellite signals recorded in the receiver 1 is still available. For a GPS receiver, the satellite signals can be captured and tracked in a capturing mode with a continuous integration time of 20ms (the navigation bit rate of the GPS satellite signal is 50bps, i.e, the cycle of the navigation bit data is 20ms), thus, the positioning time is decreased, and the capturing sensitivity and the tracking sensitivity can be further increased. For a Beidou receiver, the Beidou Geostationary Earth Orbit (hereinafter GEO) satellite signals can be captured and tracked in a capturing mode with a continuous integration time of 2ms (the navigation bit rate of the Beidou GEO satellite signal is 500bps, i.e., the cycle of the navigation bit data is 2ms), or the Beidou Middle Earth Orbit (hereinafter MEO) satellite signals and Beidou Inclined Geosynchronous Satellite Orbit (hereinafter IGSO) satellite signals can be captured and tracked in a capturing mode with a continuous integration time of 20ms (the navigation bit rate of the Beidou Non-Geostationary Earth Orbit satellite signal is 50bps, e.g. MEO satellite signal, and IGSO satellite signal, and the cycle of the navigation bit data is 20ms), thus, the positioning time is decreased, and the capturing sensitivity and the tracking sensitivity can be further increased.

In a situation when relative low positioning accuracy is accepted, the time interval for sending the instruction can be more than two hours. For example, when the receiver 1 is applied to photographing, the place shown in the photo or video doesn't need to be so accurate, therefore an approximate positioning can satisfy the customers' requirement. So, the time interval can be set to be more than two hours to decrease the power consumption.

In addition, if the ephemeris information in the receiver 1 fails to be updated within 24 hours, the receiver 1 spends much more time to capture and track the satellite signals, and the positioning time may be increased. Thus, the time interval of sending the instruction for updating the ephemeris information cannot exceed 24 hours.

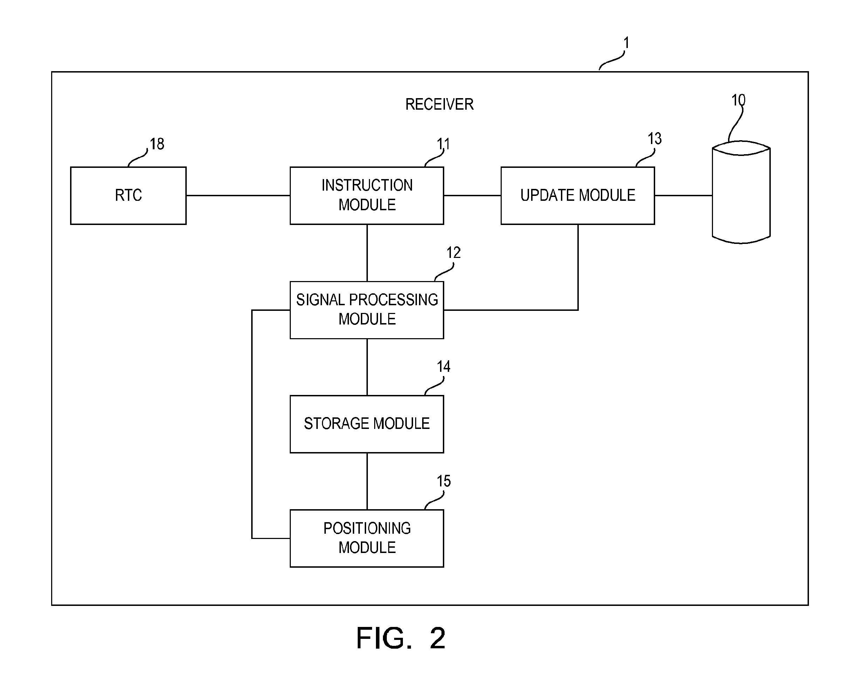

FIG. 2 illustrates another example of a satellite signal receiver 1, in accordance with one embodiment of the present disclosure. Elements having similar functions as in FIG. 1 are labeled the same and will not be repetitively described herein for purposes of brevity and clarity. As shown in FIG. 2, the receiver 1 further includes a storage module 14 and a positioning module 15. The storage module 14 is configured to store satellite data downloaded by the signal processing module 12. The positioning module 15 is configured to determine a position of the receiver 1 according to the satellite data downloaded by the signal processing module 12, and the number of the satellites for calculating the position of the receiver 1 is more than or equal to three. Traditionally, the number of the satellites for calculating the position should be at least four. However, when the number of the satellites for calculation is three, the Earth can be used as a satellite combined with the other three satellites to calculate the position of the receiver 1 by the positioning module 15.

When the initial position of the receiver 1 is known, the positioning calculation may has an advantage of fast convergence, and the number of the visible satellites can be calculated according to the initial position of the receiver 1 so as to reduce the number of the satellites to be searched. Preferably, the positioning module 15 may calculate the current position of the receiver 1 according to the downloaded satellite data when the ephemeris information is updated, and the current position is stored as the initial position in the storage module 14.

In other words, the storage module 14 not only stores the satellite data download by the signal processing module 12, but also stores the ephemeris information updated by the update module 13 and the current position of the receiver 1 calculated by the positioning module 15. The current position is used as an initial position for positioning calculation accordingly. For example, the positioning module 15 may perform the positioning calculation according to the downloaded satellite data and the initial position.

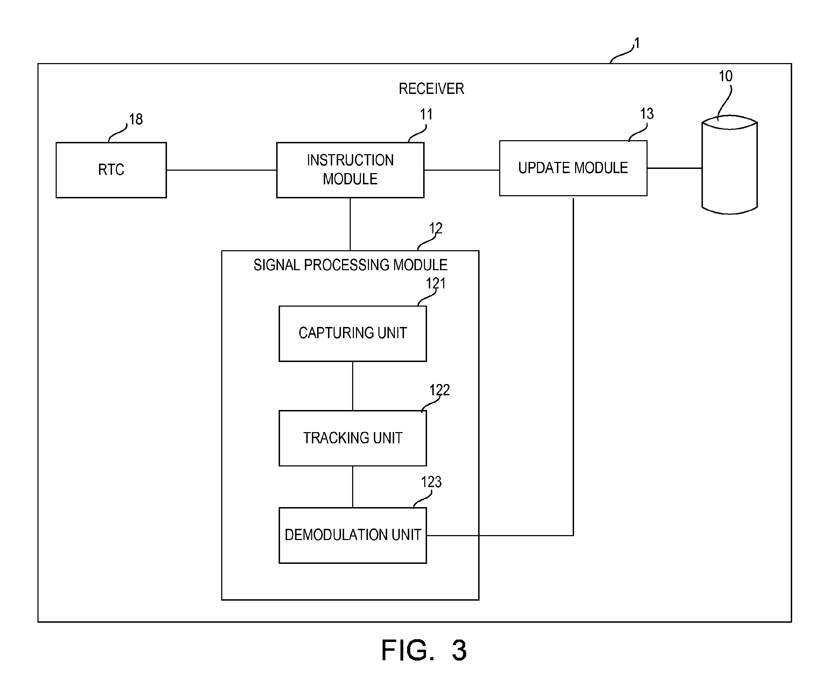

FIG. 3 illustrates another example of a satellite signal receiver 1, in accordance with one embodiment of the present disclosure. Elements having similar functions as in FIG. 1 are labeled the same and will not be repetitively described herein for purposes of brevity and clarity. As shown in FIG. 3, the signal processing module 12 in the receiver 1 may include a capturing unit 121, a tracking unit 122, and a demodulation unit 123.

In one embodiment, the capturing unit 121 is configured to capture satellite signals in response to the instruction for updating the ephemeris information from the instruction module 11. The tracking unit 122 is configured to track the captured satellite signals in response to the instruction for updating the ephemeris information from the instruction module 11. The demodulation unit 123 is configured to demodulate the tracked satellite signals in response to the instruction for updating the ephemeris information from the instruction module 11 and download corresponding satellite data so that the update module 13 can update the ephemeris information 10 according to the downloaded satellite data.

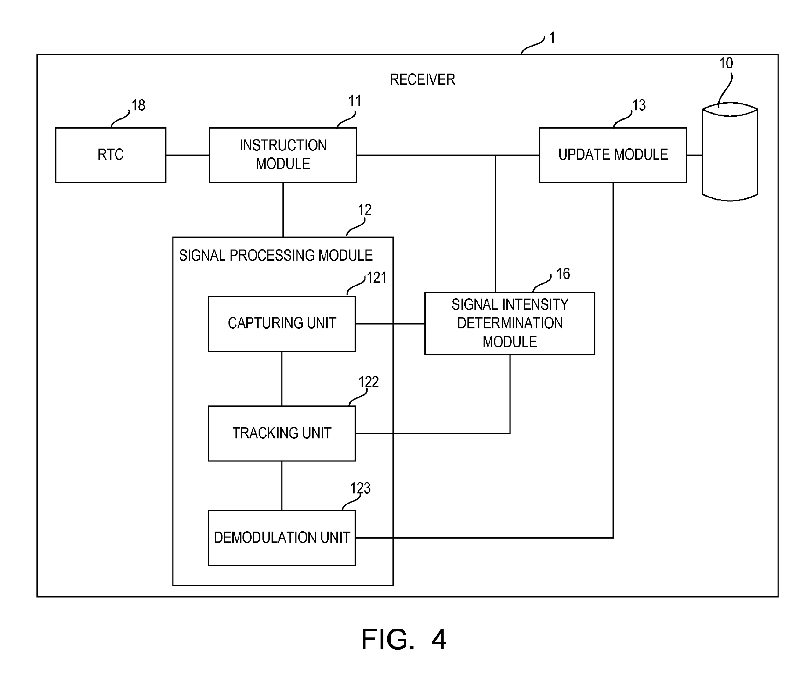

FIG. 4 illustrates another example of a satellite signal receiver 1, in accordance with one embodiment of the present disclosure. Elements having similar functions as in FIG. 3 are labeled the same and will not be repetitively described herein for purposes of brevity and clarity. As shown in FIG. 4, the receiver 1 may further include a signal intensity determination module 16. The signal intensity determination module 16 is configured to determine if the intensity value of the satellite signals received by the receiver 1 is less than a predetermined threshold value. If the intensity value of the satellite signals is less than the predetermined threshold value, the update module 13 does not respond to the instruction for updating the ephemeris information from the instruction module 11.

In one embodiment, the signal intensity determination module 16 can determine the intensity of the satellite signals according to actual experience. For example, the signal intensity determination module 16 determines if the intensity value of the satellite signal received by the receiver 1 is less than a predetermined threshold value according to the capture mode of the capturing unit 121 or the signal intensity calculated by the tracking unit 122. And then the signal intensity determination module 16 can determine the current environment where the receiver 1 is and determine if the ephemeris information can be demodulated. In one embodiment, if there are more than four satellites captured with 20msxN satellite capturing mode, wherein 20ms represents the satellite signals with a continuous integration time of 20ms, and N represents the satellite signals with a non-continuous integration number of N, and N is a natural number and less than 500, 20msxN satellite capturing mode represents that the signal environment of the receiver 1 is good enough to demodulate the satellite signals. The update module 13 can update the ephemeris information according to the demodulated satellite signals. Otherwise, the signal environment is regarded as unsatisfied and the receiver 1 is in sleep mode, thus, the update module 13 does not respond to the instruction for updating the ephemeris information and the receiver 1 will not be woke up until receiving the next instruction for updating the ephemeris information. In a situation that the signal intensity values of the satellite signals from four satellites are all more than -148dBm, the signal environment of the receiver 1 is good enough to perform the next operation. Otherwise, the receiver 1 is in sleep mode again.

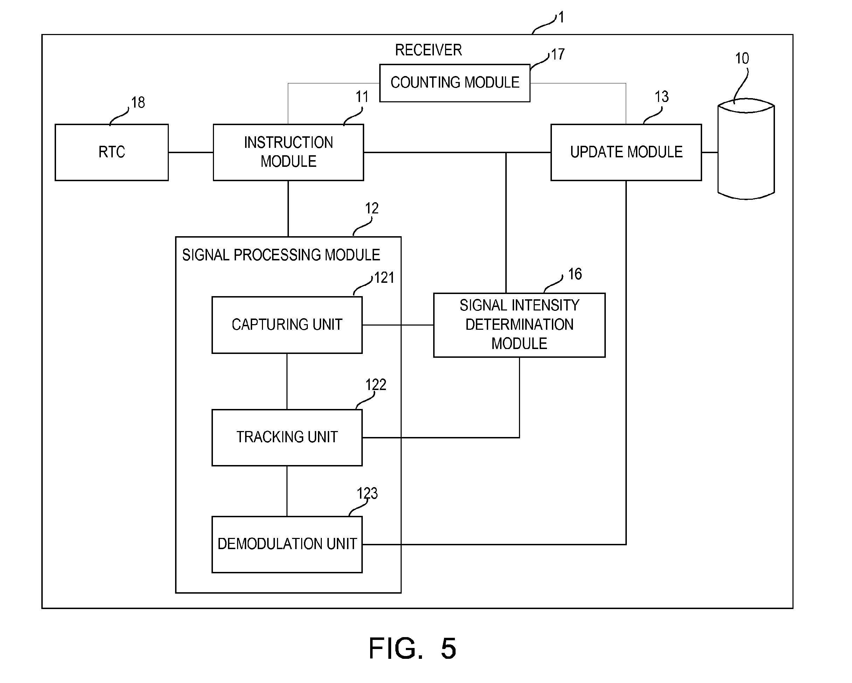

FIG. 5 illustrates another example of a satellite signal receiver 1, in accordance with one embodiment of the present disclosure. Elements having similar functions as in FIG. 4 are labeled the same and will not be repetitively described herein for purposes of brevity and clarity. As shown in FIG. 5, the receiver 1 may further include a counting module 17. The counting module 17 is configured to count the number of the instructions for updating the ephemeris information that are not responded by the update module 13 when the intensity value of the satellite signals is less than the predetermined threshold value. In one configuration, if the number of the instructions that are not responded by the update module 13 reaches a predefined number, the receiver 1 is determined to be in a weak signal environment. For example, when the receiver 1 is in a sheltered environment, e.g. in a room, the satellite signals may be weak. In this situation, if the instruction module 11 still sends the instructions for updating the ephemeris information to the signal processing module 12 and the update module 13 at predetermined time intervals, the power consumption of the receiver 1 may be increased. Accordingly, when the receiver 1 is determined to be in the weak signal environment, the time interval of sending the instruction for updating the ephemeris information by the instruction module 11 can be prolonged to decrease power consumption of the receiver 1.

In one embodiment, when the number of the instructions that are not responded reaches the predefined number, the receiver 1 is determined to be in the sheltered environment. The instruction module 11 may prolong the time interval of sending the instructions to decrease the power consumption, and the count value of the counting module 17 may be reset to zero.

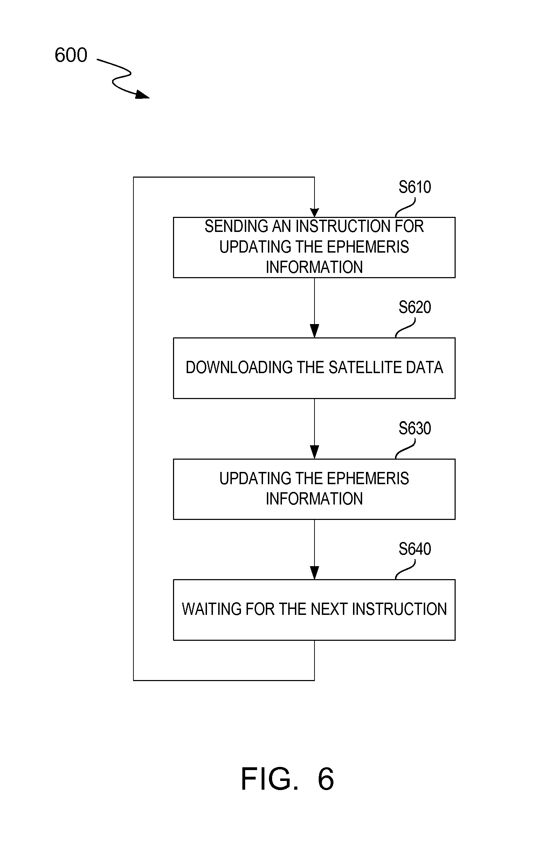

FIG. 6 illustrates a flowchart 600 that depicts an exemplary method for updating the ephemeris information in the receiver 1, in accordance with one embodiment of the present disclosure. FIG. 6 will be described in combination with FIG. 1. In Step S61 0, the instruction module 11 in the receiver 1 sends an instruction for updating the ephemeris information at a predefined time interval. In one embodiment, the time interval is set to be two hours. Next, where the signal processing module 12 captures, tracks, and demodulates satellite signals in response to the instruction from the instruction module 11, and downloads corresponding satellite data at Step S620. Step S630, the update module 13 updates the ephemeris information 10 in the receiver 1 according to the satellite data downloaded by the signal processing module 12 in response to the instruction from the instruction module 11. At Step S640, after updating the ephemeris information, the receiver 1 may wait for the next instruction for updating the ephemeris information sent from the instruction module 11, returning to Step S610.

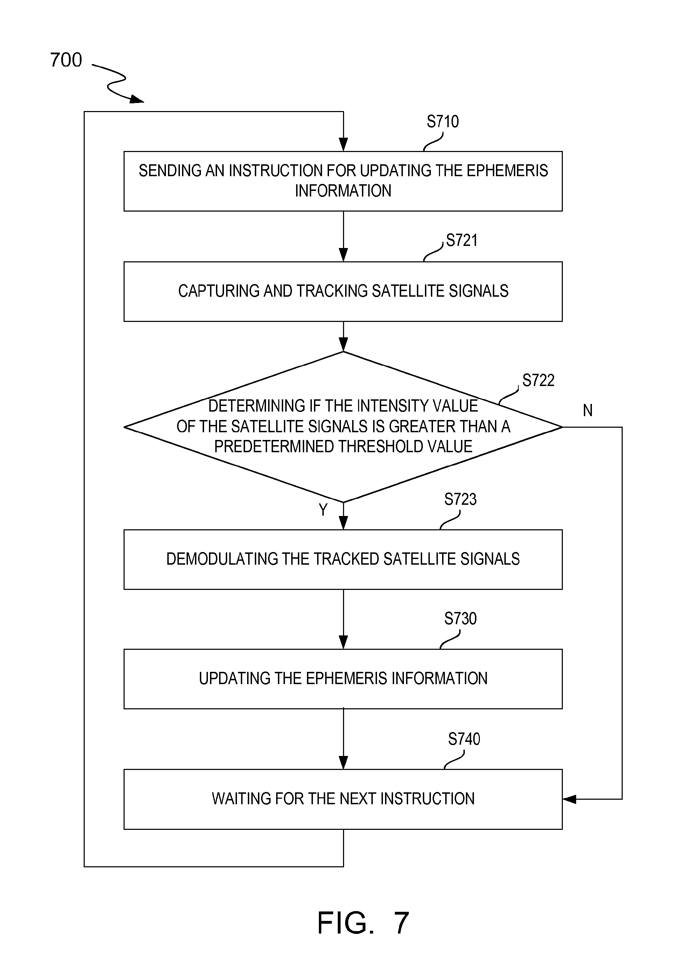

FIG. 7 illustrates a flowchart 700 that depicts an exemplary method for updating the ephemeris information in the receiver 1, in accordance with one embodiment of the present disclosure. FIG. 7 will be described in combination with FIG. 4. The method disclosed in this example includes Steps S710-S740, wherein the Steps S710, S730, and S740 perform similar functions as Steps S61 0, S630, and S640, respectively, as disclosed in the above-mentioned example. Step S620 in FIG. 6 can further include Steps S721-S723 shown in FIG. 7.

In Step S721, the capturing unit 121 in the receiver 1 captures satellite signals in response to the instruction for updating the ephemeris information from the instruction module 11, and the tracking unit 122 in the receiver 1 tracks the captured satellite signals in response to the instruction for updating the ephemeris information from the instruction module 11. Next at Step S722, the signal intensity determination module 16 determines if the intensity value of the satellite signals received by the receiver 1 is greater than a predetermined threshold value. If the intensity value of the satellite signals is greater than the predetermined threshold value, Step S723 is performed. If the intensity valve of the satellite signal is not greater than the predetermined threshold value, the process advances to Step S740 for the next instruction. At Step S723, the demodulation unit 123 demodulates the tracked satellite signals in response to the instruction for updating the ephemeris information from the instruction module 11 and downloads corresponding satellite data, so that the update module 13 can update the ephemeris information 10 in the receiver 1 at Step S730.

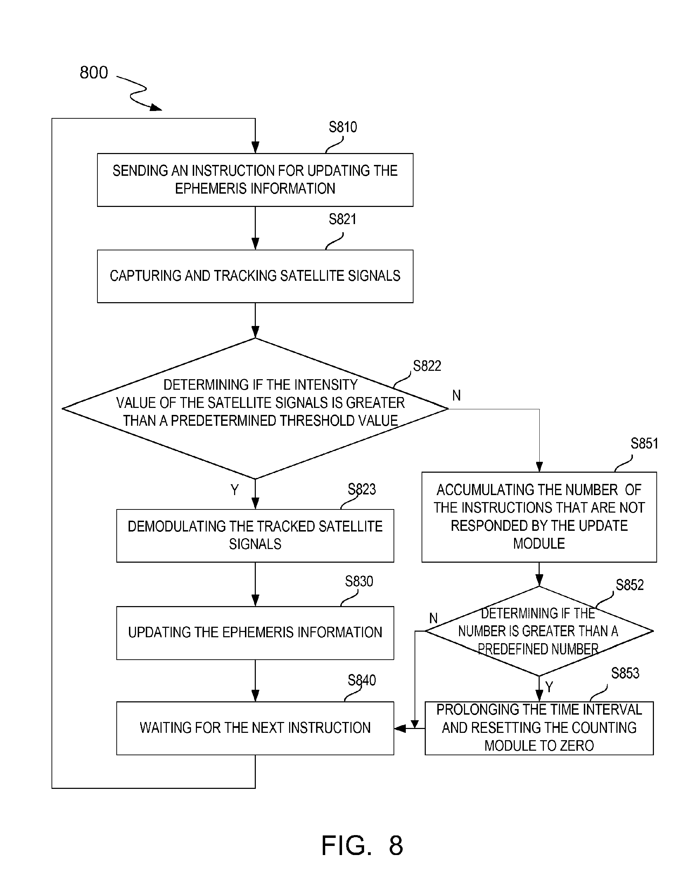

FIG. 8 illustrates a flowchart 800 depicting another exemplary method for updating the ephemeris information in the receiver, in accordance with one embodiment of the present disclosure. FIG. 8 will be described in combination with FIG. 5. The method disclosed in this example includes Steps S810-S853, wherein Steps S810-S840 perform similar functions as Steps S710-S740, respectively, as disclosed in the above-mentioned example. The method further includes Steps S851-S853. As shown in FIG. 8, if the intensity value of the satellite signals is less than the predetermined threshold value, the process advances to Step S851. At Step S851, the number of the instructions for updating the ephemeris information that are not responded by the update module 13 is accumulated one by one by the counting module 17 in FIG. 5. At Step S852, a determination unit (not shown in FIG. 5) in the counting module 17 determines if the accumulated number of the instructions is greater than a predefined number. If the accumulated number of the instructions is greater than the predefined number, the time interval of sending the instruction for updating the ephemeris information is prolonged, and the counting module 17 may be reset to zero, Step S853. If not, the process advances to Step S840 for the next instruction.

When the initial position of the receiver 1 is known, the positioning calculation may facilitate fast convergence, and the number of the visible satellite can be calculated according to the initial position of the receiver 1. Thus, the number of the satellites searched by the receiver 1 is reduced. Referring to the method for updating the ephemeris information in the receiver 1 disclosed above, when the update module 13 updates the ephemeris information 10 in the receiver 1, the positioning module 15 may perform the positioning calculation to calculate the current position of the receiver 1 according to the downloaded satellite data, and the current position of the receiver 1 may be used as an initial position that is used for the next positioning calculation which is stored in the storage module 14.

In one embodiment, the above-mentioned method can be utilized in a single mode receiver or a multi-mode receiver. For example, the receiver may be a GPS receiver, a BD receiver, a Glonass receive, a Galileo receiver, or a multi-mode receiver.

Whereas the foregoing description and drawings represent embodiments of the present disclosure, it will be understood that various additions, modifications, and substitutions may be made therein without departing from the spirit and scope of the principles of the present disclosure as defined in the accompanying claims. One skilled in the art will appreciate that the present disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the present disclosure being indicated by the appended claims and their legal equivalents, and not limited to the foregoing description.

## Claims

1. A satellite signal receiver, comprising:
an instruction module configured to send an instruction for updating ephemeris information at a set time interval;
a signal processing module configured to obtain corresponding satellite data; and
an update module configured to update the ephemeris information according to the obtained satellite data in response to the instruction for updating ephemeris information.

2. The receiver of claim 1, wherein the signal processing module comprises:
a capturing unit configured to capture satellite signals in response to the instruction for updating ephemeris information;
a tracking unit configured to track the satellite signals captured by the capturing unit in response to the instruction for updating ephemeris information; and
a demodulation unit configured to demodulate the satellite signals tracked by the tracking unit in response to the instruction for updating ephemeris information, and obtain corresponding satellite data.

3. The receiver of claim 1 or 2, further comprising:
a signal intensity determination module configured to determine if the intensity value of the satellite signals is less than a predetermined threshold value,
wherein the update module does not respond to the instruction for updating ephemeris information if the intensity value of the satellite signals is less than the predetermined threshold value.

4. The receiver of claim 3, further comprising:
a counting module configured to count the number of the instructions for updating ephemeris information that are not responded by the update module if the intensity value of the satellite signals is less than a predetermined threshold value,
wherein the instruction module sends the instruction for updating ephemeris information at a second time interval which is longer than the set time interval and resets the counting module to zero when the number of the instructions for updating ephemeris information that are not responded by the update module reaches a predetermined value.

5. The receiver of one of claims 1 to 4, further comprising:
a positioning module configured to calculate a position of the receiver according to the obtained satellite data,
wherein the position of the receiver is stored in the receiver as an initial position of the receiver that is used for positioning calculation.

6. The receiver of one of claims 1 to 5, further comprising:
a real-time clock configured to provide a local real time, wherein the instruction module sends the instruction for updating ephemeris information at the set time interval according to the local real time.

7. The receiver of one of claims 1 to 6, wherein the set time interval is less than or equal to two hours.

8. A method for updating ephemeris information in a receiver, comprising:
sending an instruction for updating ephemeris information at a set time interval by an instruction module;
obtaining corresponding satellite data by a signal processing module; and
updating the ephemeris information according to the obtained satellite data in response to the instruction for updating ephemeris information by an update module.

9. The method of claim 8, further comprising:
capturing the satellite signals in response to the instruction for updating ephemeris information;
tracking the captured satellite signals in response to the instruction for updating ephemeris information; and
demodulating the tracked satellite signals in response to the instruction for updating ephemeris information.

10. The method of claim 8 or 9, further comprising:
determining if the intensity value of the satellite signals received by the receiver is less than a predetermined threshold value,
wherein the update module does not respond to the instruction for updating ephemeris information if the intensity value of the satellite signals is less than the predetermined threshold value.

11. The method of claim 10, further comprising:
counting the number of the instructions for updating ephemeris information that are not responded by an update module if the intensity value of the satellite signals is less than a predetermined threshold value, wherein the instruction module sends the instruction for updating ephemeris information at a second time interval which is longer than the set time interval and resets the counting module to zero when the number of instructions for updating ephemeris information that are not responded by the update module reaches a predetermined value.

12. The method of claim 8, 9, 10 or 11, further comprising:
calculating a position of the receiver according to the obtained satellite data,
wherein the position of the receiver is stored in the receiver as an initial position of the receiver that is used for positioning calculation.

13. The method of one of claims 8 to 12, wherein the set time interval is less than or equal to two hours.
